# EUROPÄISCHE PATENTANMELDUNG

(11) **EP 0 943 779 A2**
(43) Veröffentlichungstag der Anmeldung: **22.09.1999**
(21) Anmeldenummer: 99104061.9
(22) Anmeldetag: 17.03.1999
(51) Int. Cl.: E21B 10/48

(54) **Hammerbohrwerkzeug**

(30) Priorität: 18.03.1998 DE 19811887
(71) Anmelder: PLICA WERKZEUGFABRIK AG, 8753 Mollis (CH)
(72) Erfinder: Jenny, Rudolf Plica Werkzeugfabrik AG, 8753 Mollis (CH)
(74) Vertreter: Sties, Jochen

(57) **Zusammenfassung**

Ein Hammerbohrwerkzeug mit einem Schaft (10) und einem Bohrkopf (12; 112), der eine von dem Schaft abgewandte Stirnseite (14; 114) aufweist, die mit mindestens einer Brechplatte (16; 116) mit jeweils mindestens einer Brechkante (17; 117₁, 117₂) und mit mehreren Brechbolzen (18, 22; 122) versehen ist, ist dadurch gekennzeichnet, daß sich jede Brechplatte (16; 116) nur über einen Teil des von ihr definierten Durchmessers des Bohrkopfes (12; 112) erstreckt und daß auch die Brechbolzen (18, 22; 122) mit jeweils einer Brechkante (20, 24; 124) versehen sind, die geradlinig ist.

## Beschreibung

Die Erfindung betrifft ein Hammerbohrwerkzeug mit einem Schaft und einem Bohrkopf, der eine von dem Schaft abgewandte Stirnseite aufweist, die mit mindestens einer Brechplatte mit jeweils mindestens einer Brechkante und mit mehreren Brechbolzen versehen ist.

Ein solches Hammerbohrwerkzeug ist aus der europaischen Patentschrift 0 452 255 bekannt. Die Brechplatte erstreckt sich entlang dem von ihr definierten Durchmesser des Bohrkopfes, steht an beiden Enden über den Außenumfang des Bohrkopfes über und ist in einer Seitenansicht gesehen dachförmig ausgestaltet, wobei die Spitze der Brechplatte auf der Mittelachse des Schaftes des Werkzeugs angeordnet ist. Die Brechbolzen dienen zum Zerkleinern des Bohrguts.

Ausgehend von diesem bekannten Stand der Technik besteht die Aufgabe der Erfindung darin, ein Hammerbohrwerkzeug bereitzustellen, das sich durch eine verbesserte Bohrleistung bei guter Standfestigkeit und Vibrationsarmut auszeichnet.

Diese Aufgabe wird gemaß der Erfindung bei einem Hammerbohrwerkzeug der eingangs genannten Art dadurch gelöst, daß sich jede Brechplatte nur über einen Teil des von ihr definierten Durchmessers des Bohrkopfes erstreckt und daß auch die Brechbolzen mit jeweils einer Brechkante versehen sind, die geradlinig ist. Ein solches Hammerbohrwerkzeug kombiniert vergleichsweise kurze Brechplatten mit mehreren Brechbolzen, die ihrerseits mit einer Brechkante versehen sind. Auf diese Weise ergibt sich bei guter Bohrleistung eine besonders gute Zerkleinerung des Bohrguts.

Vorzugsweise ist vorgesehen, daß bei einem Großteil der Brechbolzen die jeweilige Brechkante so ausgerichtet ist, daß sie sich in einer Richtung erstreckt, die von einer bezüglich des Bohrkopfes radialen Richtung abweicht. Diese Gestaltung beruht auf der Erkenntnis, daß für eine gute Zerkleinerung des Bohrgutes eine Ausrichtung der Brechbolzen-Brechkanten vorteilhaft ist, die sich von der üblicherweise radialen Ausrichtung der Brechkanten der Brechplatten unterscheidet.

Gemäß der bevorzugten Ausführungsform der Erfindung ist weiterhin vorgesehen, daß sich jede Brechplatte ausgehend vom äußeren Ende des entsprechenden Armes über weniger als die Hälfte der Strecke vom radial äußeren Ende des Armes bis zur Mitte des Bohrkopfes erstreckt. Diese Gestaltung beruht auf der Erkenntnis, daß die Verwendung von vergleichsweise kurzen Brechkanten, die sehr viel kürzer als die im Stand der Technik üblichen, sich über den gesamten Bohrkopf erstrekkenden Brechkanten sind, für die Bohrleistung des Werkzeugs vorteilhaft sind.

Gemäß einer anderen bevorzugten Ausführungsform der Erfindung ist vorgesehen, daß die Brechplatte sich entlang einem Durchmesser des Bohrkopfes erstreckt und einen ersten Abschnitt, der ausgehend von der Mitte des Bohrkopfes zu dessen Außenumfang hin verläuft, und einen zweiten Abschnitt enthält, der sieh ausgehend von der Mitte des Bohrkopfes nur über einen Teil der Strecke von der Mitte bis zum Außenumfang hin erstreckt. Auch bei dieser Ausführungsform der Erfindung erstreckt sich die Brechplatte nicht über den gesamten Bohrkopf, sondern nur über einen Teil von diesem. Eine solche Brechplatte ist zusammen mit den mit einer Brechkanten versehenen Brechbolzen in der Lage, die gewünschte Bohrleistung zu erzielen.

Gemäß dieser bevorzugten Ausführungsform der Erfindung sind zwei Brechbolzen vorgesehen, die jeweils in einem Bereich zwischen dem von dem zweiten Abschnitt der Brechplatte definierten Radius und einem zu diesem Radius senkrechten Radius liegen. Jeder der beiden Brechbolzen liegt also innerhalb eines Winkelbereichs, der sich ausgehend von dem durch den zweiten Abschnitt der Brechplatte definierten Radius über 90° im Uhrzeigersinn bzw. entgegen dem Uhrzeigersinn erstreckt. Bei dieser Anordnung der Brechbolzen wird, obwohl nur zwei Brechbolzen verwendet werden, eine gute Zerkleinerung des Bohrguts erreicht.

Vorzugsweise ist vorgesehen, daß sich die Brechkante jedes Brechbolzens senkrecht zu dem von der Brechplatte definierten Durchmesser des Bohrkopfes erstreckt. Die Brechbolzen-Brechkante verläuft also schräg zur Drehrichtung des entsprechenden Brechbolzens, was zu einer guten Zerkleinerung des Bohrguts beiträgt.

Weitere vorteilhafte Ausgestaltungen der Erfindung ergeben sich aus den Unteransprüchen.

Die Erfindung wird nachfolgend unter Bezugnahme auf zwei bevorzugte Ausführungsformen beschrieben, die in den Zeichnungen dargestellt sind. In diesen zeigen:
- Figur 1 eine Draufsicht auf den Bohrkopf eines Hammerbohrwerkzeugs gemäß einer ersten Ausführungsform der Erfindung;
- Figur 2 in einer Querschnittsansicht das in Figur 1 gezeigte Hammerbohrwerkzeug;
- Figur 3 in einer Ansieht entsprechend derjenigen von Figur 1 eine erste Variante der ersten Ausführungsform der Erfindung;
- Figur 4 in einer Querschnittsansicht das Hammerbohrwerkzeug von Figur 3;
- Figur 5 in einer Ansicht entsprechend derjenigen von Figur 1 eine zweite Variante der ersten Ausführungsform der Erfindung:
- Figur 6 in einer Querschnittsansicht das Hammerbohrwerkzeug von Figur 5;
- Figur 7 in einer Ansicht entsprechend derjenigen von Figur 1 eine dritte Variante der ersten Ausführungsform der Erfindung;
- Figur 8 in einer Querschnittsansicht das Hammerbohrwerkzeug von Figur 7;
- Figur 9 eine Draufsicht auf den Bohrkopf eines Hammerbohrwerkzeugs gemäß einer zweiten Ausführungsform der Erfindung;
- Figur 10 eine teilgeschnittene Ansicht entlang der Ebene IV-IV von Figur 9; und
- Figur 11 eine teilgeschnittene Ansicht entlang der Ebene V-V von Figur 9.

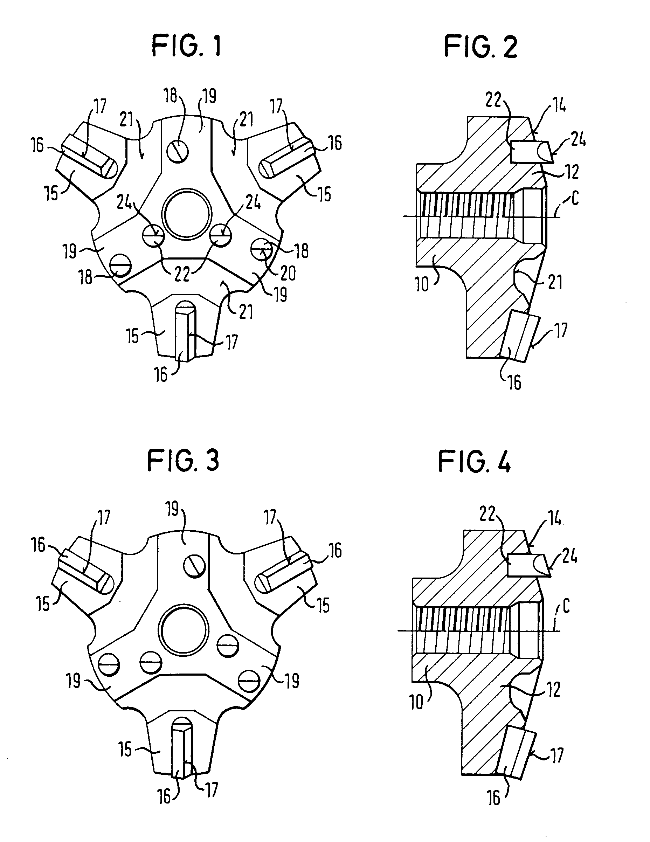

In den Figuren 1 und 2 ist eine erste Ausführungsform eines erfindungsgemäßen Hammerbohrwerkzeugs gezeigt. Dieses besteht aus einem Schaft 10 und einem Bohrkopf 12, der eine vom Schaft 10 abgewandte Stirnseite 14 aufweist. Die Stirnseite 14 ist kegelförmig ausgebildet, wobei die gedachte Spitze des gebildeten Kegels auf der Mittelachse C des Werkzeugs liegt. Am Bohrkopf 12 sind sechs Arme vorgesehen (siehe Figur 1), die sich bezüglich der Mittelachse C in radialer Richtung erstrecken. Von den sechs Armen sind drei Arme 19 kürzer ausgebildet als die verbleibenden drei Arme 15. Die kürzeren Arme 19 sind auf dem im wesentlichen zylindrischen Bohrkopf 12 gebildet, indem vertiefte Bereiche 21 in der Stirnseite 14 vorgesehen sind. Die längeren Arme 15 stehen über den Außenumfang des zylindrischen Bohrkopfes hervor.

Jeder längere Arm 15 ist an seinem radial außenliegenden Ende mit einer Brechplatte 16 versehen, deren Brechkante 17 sich in einem von Null verschiedenen Abstand parallel zu einem durch die Längsachse der Brechplatte 16 verlaufenden Radius erstreckt. Da die Stirnfläche 14 kegelförmig ist und die Brechplatten 16 parallel zu der Stirnfläche und über diese hervorstehend angeordnet sind, ragt das radial außenliegende, vom Schaft 10 entfernte Ende jeder Brechplatte über den Außenumfang der längeren Arme 15 hinaus. Ein wichtiges Merkmal besteht darin, daß sich die Brechplatten 16 nur über einen Teil der Länge des Radius erstrecken, auf dem sie sich befinden. Bei dieser Ausführungsform nehmen die Brechplatten weniger als die Hälfte der Strecke vom radial äußeren Ende des Armes bis zur Mitte des Bohrkopfes ein.

Auf den kürzeren Armen 19 sind insgesamt fünf Brechbolzen angeordnet. Auf einem der Arme 19 befindet sich ein Brechbolzen 18, während sich auf den beiden verbleibenden kürzeren Armen 19 jeweils zwei Brechbolzen 18, 22 befinden. Abweichend von der gezeigten Ausführungsform können auf jedem Arm des Werkzeugs zwischen einem und vier Brechbolzen angeordnet sein, und zwar unabhängig davon, ob es sich um einen längeren oder um einen kürzeren Arm handelt.

Jeder Brechbolzen weist eine geradlinige Brechkante 20 bzw. 24 auf. Jede der Brechbolzen-Brechkanten 20 bzw. 24 ist relativ zu einem durch die Mitte des entsprechenden Brechbolzens laufenden Radius in einem von Null verschiedenen Winkel ausgerichtet. Dieser Winkel ist für alle Brechbolzen dem Betrag nach etwa gleich groß, wobei jedoch die Brechbolzen-Brechkanten in unterschiedlichen Richtungen gegenüber einer zum entsprechenden Radius parallelen Ausrichtung verdreht sind: Bei den sich in Figur 1 nach oben sowie nach rechts unten erstreckenden Armen sind die Brechbolzen-Brechkanten entgegen dem Uhrzeigersinn gegenüber einer zum entsprechenden Radius parallel verlaufenden Ausrichtung verdreht, während die Brechbolzen-Brechkanten bei dem bezüglich Figur 1 nach links unten verlaufenden Arm im Uhrzeigersinn verdreht sind. Dies führt dazu, daß die Brechkanten der Brechbolzen auf den mit jeweils zwei Brechbolzen versehenen Armen etwa parallel zueinander verlaufen.

Die Anordnung der verschiedenen Brechbolzen bezüglich ihres Abstandes von der Längsachse C des Hammerbohrwerkzeugs ist so gewählt, daß es zu einer gleichmäßigen Zerkleinerung des Bohrguts kommt. Die am weitesten außen liegenden Brechbolzen der mit jeweils zwei Brechbolzen versehenen kürzeren Arme liegen etwa in demselben Abstand von der Mittellängsachse wie das radial innenliegende Ende der Brechplatten 16. Die beiden anderen Brechbolzen dieser kürzeren Arme liegen relativ nahe an der Mittelachse des Hammerbohrwerkzeugs. Der auf dem verbleibenden kürzeren Arm angeordnete einzige Brechbolzen weist einen Abstand von der Mittelachse C auf, der zwischen den Abständen der radial außenliegenden bzw. radial innenliegenden Brechbolzen liegt.

Bei der Ausführungsform von Figur 1 sind die radial außenliegenden Brechbolzen der mit jeweils zwei Brechbolzen versehenen kürzeren Arme jeweils in gleicher Richtung von der Mitte des Armes weg versetzt. Die radial innenliegenden Brechbolzen dieser kürzeren Arme liegen etwa auf einem durch die Mitte der Arme verlaufenden Radius. Der auf dem verbleibenden kürzeren Arm angeordnete einzige Brechbolzen ist relativ zu einem durch die Mitte des Arms verlaufenden Radius in derselben Richtung versetzt wie die radial außenliegenden Brechbolzen der anderen kürzeren Arme.

Bei der in den Figuren 3 und 4 gezeigten Variante sind die radial außenliegenden Brechbolzen der mit zwei Brechbolzen versehenen kürzeren Arme sowie der auf dem verbleibenden kürzeren Arm angeordnete einzige Brechbolzen in derselben Richtung gegenüber einem durch die Mitte des entsprechenden Arms verlaufenden Radius versetzt. Die radial innenliegenden Brechbolzen der mit zwei Brechbolzen versehenen Arme sind in der entgegengesetzten Richtung gegenüber einem solchen Radius versetzt.

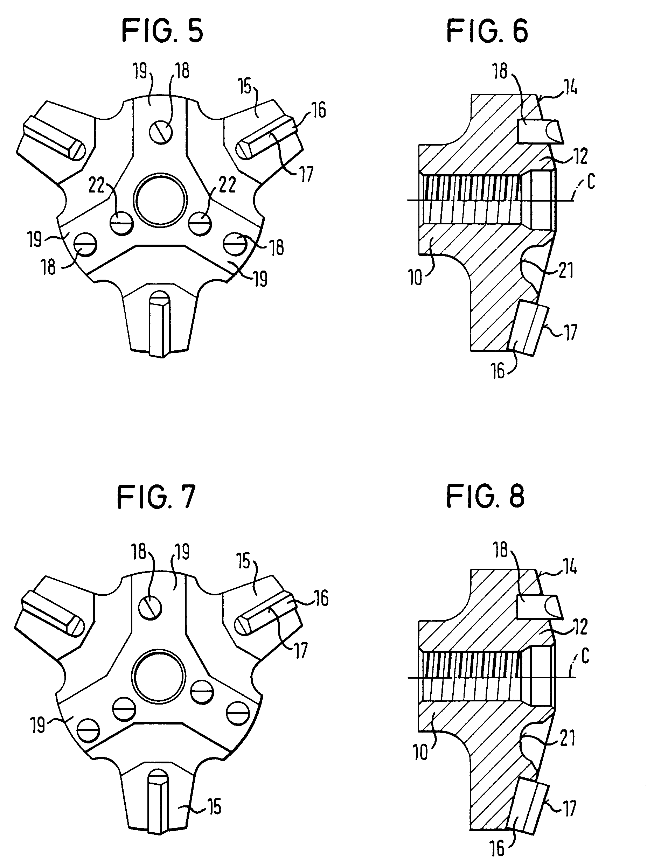

Bei der in den Figuren 5 und 6 gezeigten Variante sind alle Brechbolzen auf einem durch die Mitte des entsprechenden Arms laufenden Radius angeordnet.

Bei der in den Figuren 7 und 8 gezeigten Variante sind alle Brechbolzen bezüglich einem durch die Mitte des entsprechenden Arms verlaufenden Radius in derselben Richtung versetzt.

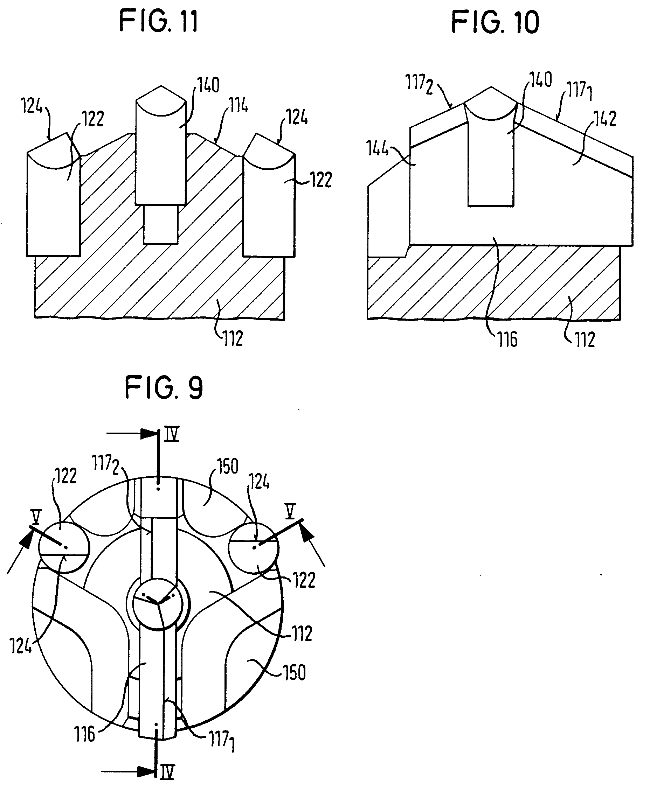

In den Figuren 9 bis 11 ist eine zweite Ausführungsform eines erfindungsgemäßen Hammerbohrwerkzeugs gezeigt, wobei lediglich der Bohrkopf 112 dargestellt ist. Der Bohrkopf 112 weist eine kegelförmige Stirnseite 114 auf und ist mit einer Brechplatte 116 versehen, die in der Seitenansicht von Figur 10 dachförmig verläuft, wobei eine mittig angeordnete Zentrierspitze 140 vorgesehen ist. Die Brechplatte 116 erstreckt sich entlang einem Durchmesser des Bohrkopfes 112 und ist unterteilt in einen ersten Abschitt 142, der sich ausgehend von der Zentrierspitze 140 zum Außenumfang des Bohrkopfes 112 hin erstreckt und eine Brechkante 117₁ aufweist, und einen zweiten Abschnitt 144, der sich ausgehend von der Zentrierspitze 140 nur über einen Teil der Strecke von der Mitte des Bohrkopfes 112 zum Außenumfang hin erstreckt und eine Brechkante 117₂ aufweist. Die beiden Brechkanten 117₁ und 117₂ sind bezüglich der Drehrichtung des Hammerbohrwerkzeugs in derselben Richtung gegenüber dem von der Brechplatte 116 definierten Durchmesser des Bohrkopfes versetzt. Der erste Abschnitt 142 der Brechplatte 116 steht an seinem radial äußeren Ende über den Außenumfang des Bohrkopfes hervor.

Der Bohrkopf 112 ist mit zwei Brechbolzen 122 versehen, die jeweils eine Brechkante 124 aufweisen. Jeder Brechbolzen 122 ist in einem Bereich angeordnet, der begrenzt ist von dem durch den zweiten Abschnitt 144 der Brechplatte 116 definierten Radius und einem zu diesem Radius senkrechten Radius. Die Brechkante 124 jedes Brechbolzens 122 ist so ausgerichtet, daß sie senkrecht zu dem vom zweiten Abschnitt 144 definierten Radius ist. Zwischen der Brechplatte und den Brechbolzen sind Nuten 150 zum Abführen des von den Brechbolzen zerkleinerten Bohrguts ausgebildet.

## Patentansprüche

1. Hammerbohrwerkzeug mit einem Schaft (10) und einem Bohrkopf (12; 112), der eine von dem Schaft abgewandte Stirnseite (14; 114) aufweist, die mit mindestens einer Brechplatte (16; 116) mit jeweils mindestens einer Brechkante (17; 117₁, 117₂) und mit mehreren Brechbolzen (18, 22; 122) versehen ist,
dadurch gekennzeichnet, daß sich jede Brechplatte (16; 116) nur über einen Teil des von ihr definierten Durchmessers des Bohrkopfes (12; 112) erstreckt und daß auch die Brechbolzen (18, 22; 122) mit jeweils einer Brechkante (20, 24; 124) versehen sind, die geradlinig ist.

2. Hammerbohrwerkzeug nach Anspruch 1, dadurch gekennzeichnet, daß bei mindestens einem Großteil der Brechbolzen (18, 22; 122) die jeweilige Brechkante (20, 24; 124) so ausgerichtet ist, daß sie sich in einer Richtung erstreckt, die von einer bezüglich des Bohrkopfes (12; 122) radialen Richtung abweicht.

3. Hammerbohrwerkzeug nach Anspruch 1 oder 2, dadurch gekennzeichnet, daß der Behrkopf drei Arme aufweist, die mit den Brechbolzen und den Brechplatten versehen sind.

4. Hammerbohrwerkzeug nach Anspruch 1 oder 2, dadurch gekennzeichnet, daß der Bohrkopf mit sechs Armen (15, 19) versehen ist, von denen jeder zweite (15) mit einer radial außenliegenden Brechplatte (16) versehen ist, und daß die Brechbolzen (18, 22) auf den verbleibenden drei Armen (19) angeordnet sind.

5. Hammerbohrwerkzeug nach Anspruch 4, dadurch gekennzeichnet, daß die mit den Brechbolzen (18, 22) versehenen Arme (19) kürzer ausgeführt sind als die mit den Brechplatten (16) versehenen Arme (15).

6. Hammerbohrwerkzeug nach Anspruch 5, dadurch gekennzeichnet, daß an zwei der kürzeren Arme (19) des Bohrkopfes (12) jeweils zwei Brechbolzen (18) angeordnet sind und daß am verbleibenden kürzeren Arm (19) ein einziger Brechbolzen (22) angeordnet ist.

7. Hammerbohrwerkzeug nach Anspruch 6, dadurch gekennzeichnet, daß die beiden auf zweien der kürzeren Arme (19) angeordneten Brechbolzen (18) radial weiter innen bzw. weiter außen liegen als der auf dem verbleibenden kürzeren Arm (19) angeordnete einzige Brechbolzen (22).

8. Hammerbohrwerkzeug nach einem der Ansprüche 3 bis 7, dadurch gekennzeichnet, daß die Brechkanten (20, 24) der Brechbolzen alle mit einem dem Betrag nach etwa gleichen Winkel bezüglich eines durch die Mitte des entsprechenden Brechbolzens verlaufenden Radius ausgerichtet sind.

9. Hammerbohrwerkzeug nach einem der Ansprüche 3 bis 8, dadurch gekennzeichnet, daß sich die Brechkante (17) jeder Brechplatte (16) in einem von Null verschiedenen Abstand parallel zu einem durch die Längsachse der Brechplatte (16) verlaufenden Radius erstreckt.

10. Hammerbohrwerkzeug nach einem der Ansprüche 3 bis 9, dadurch gekennzeichnet, daß die Stirnseite (14) des Bohrkopfes (12) kegelförmig ist, wobei die Spitze des Kegels von dem Schaft (10) abgewandt ist.

11. Hammerbohrwerkzeug nach einem der Ansprüche 3 bis 10, dadurch gekennzeichnet, daß das radial äußere Ende jeder Brechplatte (16) über den Außenumfang des Bohrkopfes (12) hervorsteht.

12. Hammerbohrwerkzeug nach einem der Ansprüche 3 bis 11, dadurch gekennzeichnet, daß sich jede Brechplatte (16) ausgehend vom äußeren Ende des entsprechenden Armes über weniger als die Hälfte der Strecke vom äußeren Ende des Armes bis zur Mitte des Bohrkopfes (12) erstreckt.

13. Hammerbohrwerkzeug nach Anspruch 5 und Anspruch 12, dadurch gekennzeichnet, daß zwischen radial außenliegenden Abschnitten der längeren Arme (15) und der Mitte des Bohrkopfes (12) abgesenkte Flächen (21) vorgesehen sind.

14. Hammerbohrwerkzeug nach Anspruch 1 oder Anspruch 2, dadurch gekennzeichnet, daß die Brechplatte (116) sich entlang einem Durchmesser des Bohrkopfes (112) erstreckt und einen ersten Abschnitt (142), der ausgehend von der Mitte des Bohrkopfes zu dessen Außenumfang hin verläuft, und einen zweiten Abschnitt (144) enthält, der sich ausgehend von der Mitte des Bohrkopfes nur über einen Teil der Strecke von der Mitte bis zum Außenumfang hin erstreckt.

15. Hammerbohrwerkzeug nach Anspruch 14, dadurch gekennzeichnet, daß das radial äußere Ende des ersten Abschnittes (142) der Brechplatte (116) über den Außenumfang des Bohrkopfes (112) hervorsteht.

16. Hammerbohrwerkzeug nach Anspruch 14 oder 15, dadurch gekennzeichnet, daß die Brechplatte (116) mit einer Zentrierspitze (140) versehen ist.

17. Hammerbohrwerkzeug nach einem der Ansprüche 14 bis 16, dadurch gekennzeichnet, daß zwei Brechbolzen (122) vorgesehen sind, die jeweils in einem Bereich zwischen dem von dem zweiten Abschnitt der Brechplatte (116) definierten Radius und einem zu diesem Radius senkrechten Radius liegen.

18. Hammerbohrwerkzeug nach einem der Ansprüche 14 bis 17, dadurch gekennzeichnet, daß sich die Brechkante (124) jedes Brechbolzens (122) senkrecht zu dem von der Brechplatte (116) definierten Durchmesser des Bohrkopfes (112) erstreckt.

19. Hammerbohrwerkzeug nach einem der Ansprüche 14 bis 18, dadurch gekennzeichnet, daß die Brechkante (124) jedes Brechbolzens (122) dessen Längsachse nicht schneidet.

20. Hammerbohrwerkzeug nach einem der Ansprüche 14 bis 19, dadurch gekennzeichnet, daß die Brechkante (124) jedes Brechbolzens (122) bezüglich der Drehrichtung des Bohrkopfes (112) in derselben Richtung gegenüber der Längsachse des entsprechenden Brechbolzens (122) versetzt ist.

21. Hammerbohrwerkzeug nach einem der Ansprüche 14 bis 20, dadurch gekennzeichnet, daß die Brechkante (117₁, 117₂) des ersten und des zweiten Abschnittes (142, 144) der Brechplatte (116) sich in einem von Null verschiedenen Abstand parallel zu dem von der Brechplatte (116) definierten Durchmesser des Bohrkopfes (112) erstreckt.

22. Hammerbohrwerkzeug nach einem der Ansprüche 14 bis 21, dadurch gekennzeichnet, daß die Brechkante (117₁, 117₂) des ersten und des zweiten Abschnittes (142, 144) der Brechplatte (116) bezüglich der Drehrichtung des Bohrkopfes (116) in derselben Richtung gegenüber dem von der Brechplatte (116) definierten Durchmesser versetzt ist.

23. Hammerbohrwerkzeug nach einem der Ansprüche 14 bis 22, dadurch gekennzeichnet, daß der Außenumfang der Brechbolzen (122) über den Außenumfang des Bohrkopfes (112) hervorsteht.

24. Hammerbohrwerkzeug nach einem der Ansprüche 14 bis 23, dadurch gekennzeichnet, daß die Brechplatte (116) in einer Seitenansicht dachförmig ausgebildet ist, wobei die Spitze auf der Mittelachse des Schaftes liegt.
